# EUROPÄISCHE PATENTSCHRIFT

(11) **EP 3 837 448 B1**
(45) Veröffentlichungstag und Bekanntmachung des Hinweises auf die Patenterteilung: **14.09.2022**
(21) Anmeldenummer: 19742314.8
(22) Anmeldetag: 10.07.2019
(51) Int. Cl.: F16C 11/08, F16C 11/06

(54) **VERFAHREN ZUR HERSTELLUNG EINES GELENKS**
METHOD FOR PRODUCING A JOINT
PROCÉDÉ POUR PRODUIRE UNE ARTICULATION

(30) Priorität: 13.08.2018 DE 102018213606
(43) Veröffentlichungstag der Anmeldung: 23.06.2021
(73) Patentinhaber: ZF Friedrichshafen AG, 88046 Friedrichshafen (DE)
(72) Erfinder: PERSON, Friederike, 32369 Rahden (DE); HAHN, Michael, 49088 Osnabrück (DE); TÖNSING, Linda, 31600 Uchte (DE)
(74) Vertreter: ZF Friedrichshafen AG
(86) Internationale Anmeldenummer: PCT/EP2019/068468
(87) Internationale Veröffentlichungsnummer: WO 2020/035226

(56) Entgegenhaltungen:
- DE-A1-102008 005 295
- DE-A1-102016 220 438
- DE-C1- 4 420 487
- US-A1- 2015 226 256

## Beschreibung

Die Erfindung betrifft ein Verfahren zum Herstellen eines Gelenks gemäß dem Oberbegriff des Anspruchs 1. Ein solches Verfahren bezieht sich auf ein Gelenk mit einem mit wenigstens einer Zapfenöffnung versehenen Gehäuse, einem einen Lagerbereich aufweisenden Gelenkinnenteil, welches mit seinem Lagerbereich in dem Gehäuse angeordnet ist und sich in einer axialen Richtung durch die Zapfenöffnung hindurch aus dem Gehäuse heraus erstreckt, einem in dem Gehäuse angeordneten, fest mit diesem verbundenen, den Lagerbereich umschließenden und aus Kunststoff bestehenden Lagerkörper, in welchem das Gelenkinnenteil mit seinem Lagerbereich beweglich gelagert ist, und wenigstens einem das Gelenkinnenteil umringenden Dichtungsbalg, der sich von einem an dem Lagerkörper oder Gehäuse vorgesehenen lagerkörperseitigen Balganlagebereich bis zu einem an dem Gelenkinnenteil vorgesehenen gelenkinnenteilseitigen Balganlagebereich erstreckt.

Im Stand der Technik wird der Dichtungsbalg z.B. direkt an das Gelenkinnenteil angelegt. Ferner wird der Dichtungsbalg am Gehäuse oder an dem Lagerkörper z.B. häufig über einen radialen Vorsprung in eine Balghaltenut eingebracht. Dazu muss der Dichtungsbalg bei der Montage aufgeweitet oder komprimiert werden, um den radialen Vorsprung überwinden zu können, was die Montage des Dichtungsbalgs erschwert. Entsprechendes kann auch bei dem am Gelenkinnenteil vorgesehenen Balganlagebereich gelten. Ferner sind häufig zusätzliche Elemente und/oder Arbeitsschritte zum Sichern des Dichtungsbalgs an den Balganlagebereichen erforderlich. Beispielsweise wird nach der Montage des Dichtungsbalgs auf dessen Endbereiche jeweils ein zusätzlicher Spannring aufgebracht. Insbesondere bei dem am Gehäuse vorgesehenen Balganlagebereich wird z.B. ein zusätzliches Ringelement zwischen dem Lagerkörper und dem Dichtungsbalg angeordnet, der durch Umbiegen eines Gehäuserands zwischen diesem und dem Ringelement festgelegt wird, mittels welchem der Lagerkörper im Gehäuse gesichert wird.

Des Weiteren sind aus der DE 10 2016 220 438 A1 oder DE 44 20 487 C1 Gelenke bekannt, bei denen an wenigstens einem Balganlagebereiche eine das Gelenkinnenteil umringende und sich in axialer Richtung erstreckende Hülse aus Kunststoff vorgesehen ist, die den Dichtungsbalg umringt oder von diesem umringt ist und an einem axialen Ende einen radialen Schenkel aufweist, an dem der Dichtungsbalg axial abgestützt ist. Hierbei wird zunächst der Balganlagebereich als eine Nut mit dem radialen Schenkel ausgebildet und anschließend der Dichtungsbalg übergestülpt. Hierbei muss der Dichtungsbalg zum Überwinden des radialen Schenkels zwangsläufig geweitet werden.

Ausgehend hiervon liegt der Erfindung insbesondere die Aufgabe zugrunde, das Sichern des Dichtungsbalgs an zumindest einem der Balganlagebereiche oder an den Balganlagebereichen vereinfachen und/oder kostengünstiger realisieren zu können. Diese Aufgabe wird durch ein Verfahren nach Anspruch 1 gelöst. Bevorzugte Weiterbildungen des Verfahrens sind in den Unteransprüchen sowie in der nachfolgenden Beschreibung gegeben.

Ein durch das erfindungsgemäße Verfahren hergestelltes Gelenk ist mit einem mit wenigstens einer Zapfenöffnung versehenen Gehäuse, einem einen Lagerbereich aufweisenden Gelenkinnenteil, welches mit seinem Lagerbereich in dem Gehäuse angeordnet ist und sich in einer axialen Richtung durch die Zapfenöffnung hindurch aus dem Gehäuse heraus erstreckt, einem in dem Gehäuse angeordneten, fest mit diesem verbundenen, den Lagerbereich umschließenden und aus Kunststoff bestehenden Lagerkörper, in welchem das Gelenkinnenteil mit seinem Lagerbereich beweglich gelagert ist, und wenigstens einem das Gelenkinnenteil umringenden Dichtungsbalg, der sich von einem an dem Lagerkörper oder Gehäuse vorgesehenen lagerkörperseitigen Balganlagebereich bis zu einem an dem Gelenkinnenteil vorgesehenen gelenkinnenteilseitigen Balganlagebereich erstreckt, dadurch weitergebildet, dass an wenigstens einem der Balganlagebereiche eine das Gelenkinnenteil umringende und sich in axialer Richtung erstreckende Hülse aus Kunststoff vorgesehen ist, die den Dichtungsbalg umringt oder von diesem umringt ist und an einem axialen Ende einen radialen Schenkel aufweist, an dem der Dichtungsbalg, insbesondere stirnseitig und/oder endseitig, axial abgestützt ist.

Da die oder die wenigstens eine Hülse aus Kunststoff besteht, kann sichergestellt werden, dass die Reibung zwischen dem Dichtungsbalg und der Hülse gering ist. Ferner ist es möglich, die oder die wenigstens eine Hülse, insbesondere zunächst, als zylindrische Hülse aus Kunststoff herzustellen und an dem wenigstens einen Balganlagebereich vorzusehen, wonach der Dichtungsbalg und die Hülse beim Führen des Dichtungsbalgs über das Gelenkinnenteil ineinander geschoben werden, wonach die Hülse, insbesondere axial endseitig, mit dem den Dichtungsbalg, insbesondere stirnseitig und/oder endseitig, axial abstützenden radialen Schenkel versehen wird. Somit muss der Dichtungsbalg zur Montage nicht aufgeweitet oder komprimiert werden, da die Hülse, insbesondere zunächst, als zylindrische Hülse hergestellt und erst nach der Montage des Dichtungsbalgs mit dem radialen Schenkel versehen wird.

Bevorzugt ist an jedem Balganlagebereich eine das Gelenkinnenteil umringende und sich in axialer Richtung erstreckende Hülse aus Kunststoff vorgesehen, die den Dichtungsbalg umringt oder von diesem umringt ist und an einem axialen Ende einen radialen Schenkel aufweist, an dem der Dichtungsbalg, insbesondere stirnseitig und/oder endseitig, axial abgestützt ist. Somit ist es möglich, die vorgenannten Vorteile an jedem Balganlagebereich zu verwirklichen.

Dem Gelenk und/oder dem Gehäuse und/oder dem Lagerkörper ist bevorzugt eine Längsachse zugeordnet. Insbesondere verläuft die Längsachse mittig durch das Gehäuse. Vorzugsweise verläuft die Längsachse mittig durch die oder die wenigstens eine Zapfenöffnung. Vorteilhaft verläuft die Längsachse mittig durch den Lagerkörper. Bevorzugt verläuft die Längsachse in der oder einer axialen Richtung. Eine oder jedwede quer zur axialen Richtung und/oder zur Längsachse verlaufende Richtung wird insbesondere als radiale Richtung bezeichnet.

Das Gehäuse umringt bevorzugt das Gelenkinnenteil und/oder den Lagerkörper. Vorteilhaft umfasst das Gehäuse eine das Gelenkinnenteil und/oder den Lagerkörper umringende Wandung. Vorteilhaft ist das Gehäuse bezüglich der Längsachse rotationssymmetrisch oder näherungsweise rotationssymmetrisch ausgebildet. Vorzugsweise ist das Gehäuse fest und/oder starr und/oder formschlüssig mit dem Lagerkörper verbunden. Insbesondere weist das Gehäuse, vorzugsweise an wenigstens einem oder an jedem seiner axialen Enden oder Endbereiche, einen oder wenigstens einen sich radial in das Material oder den Kunststoff des Lagerkörpers hinein erstreckenden Vorsprung auf, durch welchen der Lagerkörper, insbesondere in axialer Richtung, formschlüssig an oder in dem Gehäuse gesichert ist. Bevorzugt ist das Gehäuse, insbesondere bezüglich der Längsachse, drehstarr mit dem Lagerkörper verbunden. Vorteilhaft weist das Gehäuse, insbesondere in der oder einer den Lagerkörper umringenden Wandung, mehrere in Umfangsrichtung des Gehäuses voneinander beabstandete Einprägungen auf, die sich radial in das Material oder den Kunststoff des Lagerkörpers und/oder in in diesem vorgesehene und voneinander beabstandete Vertiefungen hinein erstrecken. Vorzugsweise ist der Lagerkörper durch die Einprägungen, insbesondere bezüglich der Längsachse, drehstarr mit dem Gehäuse verbunden. Bevorzugt ist der Lagerkörper durch die Einprägungen, insbesondere in axialer Richtung, formschlüssig an oder in dem Gehäuse gesichert. Vorteilhaft sind die Einprägungen in axialer Richtung, insbesondere mittig, zwischen den Vorsprüngen vorgesehen. Das Gehäuse bildet bevorzugt einen formstabilen Körper. Insbesondere besteht das Gehäuse aus Metall. Beispielsweise besteht das Gehäuse aus Aluminium oder aus einem Eisenwerkstoff, wie z.B. Stahl. Vorzugsweise besteht das Gehäuse aus Blech, wie z.B. Aluminiumblech oder Stahlblech.

Dem Gelenkinnenteil ist bevorzugt eine Gelenkinnenteillängsachse zugeordnet, die vorzugsweise mittig durch das Gelenkinnenteil verläuft. Vorteilhaft ist das Gelenkinnenteil bezüglich der Gelenkinnenteillängsachse rotationssymmetrisch oder näherungsweise rotationssymmetrisch ausgebildet. Beispielsweise verläuft die Gelenkinnenteillängsachse, insbesondere in einer Neutralstellung des Gelenkinnenteils, in oder näherungsweise in axialer Richtung. Bevorzugt ist das Gelenkinnenteil durch die bewegliche Lagerung des Lagerbereichs in dem Lagerkörper relativ zu dem Gehäuse drehbar und/oder schwenkbar. Somit ist es z.B. möglich, die Gelenkinnenteillängsachse gegenüber der axialen Richtung und/oder gegenüber der Längsachse zu neigen. In der oder einer Neutralstellung des Gelenkinnenteils fällt die Gelenkinnenteillängsachse insbesondere mit der Längsachse zusammen und/oder die Gelenkinnenteillängsachse verläuft in der oder einer Neutralstellung des Gelenkinnenteils insbesondere in axialer Richtung. Das Gelenkinnenteil besteht z.B. aus Vollmaterial und/oder das Gelenkinnenteil ist z.B. mit einem Durchgangsloch versehen, welches sich vorzugsweise in Richtung der Gelenkinnenteillängsachse erstreckt. Der Lagerbereich des Gelenkinnenteils ist beispielsweise ballig und/oder konvex und/oder kugelförmig ausgebildet. Beispielsweise umfasst das Gelenkinnenteil einen oder wenigstens einen sich an den Lagerbereich anschließenden und sich von diesem weg erstreckenden Halsbereich, der z.B. auch als Zapfenbereich bezeichnet werden kann. Vorteilhaft umfasst das Gelenkinnenteil zwei sich an den Lagerbereich anschließende und sich von diesem wegerstreckende Halsbereiche, zwischen denen der Lagerbereich angeordnet ist. Bevorzugt bildet das Gelenkinnenteil einen Kugelzapfen oder eine Kugelhülse. Vorteilhaft bildet das Gelenk ein Kugelgelenk oder ein Kugelhülsengelenk. Das Gelenkinnenteil bildet bevorzugt einen formstabilen Körper. Insbesondere besteht das Gelenkinnenteil aus Metall. Beispielsweise besteht das Gelenkinnenteil aus Aluminium oder aus einem Eisenwerkstoff, wie z.B. Stahl.

Der gelenkinnenteilseitige Balganlagebereich liegt insbesondere außerhalb des Gehäuses und/oder des Lagerkörpers. Vorteilhaft ist der gelenkinnenteilseitige Balganlagebereich an dem oder dem wenigstens einen Halsbereich oder einem der Halsbereiche vorgesehen. Vorzugsweise ist das Gelenkinnenteil an seinem Außenumfang, insbesondere in oder an dem gelenkinnenteilseitigen Balganlagebereich und/oder an seinen, vorzugsweise axialen, Enden, mit einem verringerten Durchmessers und/oder mit einer, vorzugsweise umlaufenden, Vertiefung versehen, die insbesondere einen Hülsensitz bildet. In oder an dem Hülsensitz sitzt z.B. die oder die wenigstens eine Hülse oder eine der Hülsen.

Der Lagerkörper umringt bevorzugt das Gelenkinnenteil. Vorzugsweise umfasst der Lagerkörper eine das Gelenkinnenteil umringende Wandung. Vorteilhaft ist der Lagerkörper bezüglich der Längsachse rotationssymmetrisch oder näherungsweise rotationssymmetrisch ausgebildet. Insbesondere ist das Gelenkinnenteil mit seinem Lagerbereich gleitfähig und/oder drehbar und/oder schwenkbar in dem Lagerkörper gelagert. Bevorzugt bildet der Lagerkörper einen formstabilen Körper. Insbesondere besteht der Lagerkörper aus einem thermoplastischen Kunststoff. Beispielsweise besteht der Lagerkörper aus Polyamid (PA) oder aus Polyoxymethylen (POM). Vorteilhaft ist der Kunststoff des Lagerkörpers mit Fasern versetzt und/oder verstärkt. Beispielsweise handelt es sich bei den Fasern um Glasfasern.

Die oder die wenigstens eine oder jede Hülse bildet bevorzugt einen formstabilen Körper. Insbesondere besteht die oder die wenigstens eine oder jede Hülse aus einem thermoplastischen Kunststoff. Beispielsweise besteht die oder die wenigstens eine oder jede Hülse aus Polyamid (PA) oder aus Polyoxymethylen (POM). Vorteilhaft ist der Kunststoff der oder der wenigstens einen oder jeder Hülse mit Fasern versetzt und/oder verstärkt. Beispielsweise handelt es sich bei den Fasern um Glasfasern. Vorzugsweise besteht die oder die wenigstens eine oder jede Hülse aus demselben oder dem gleichen Kunststoff wie der Lagerkörper.

Der radiale Schenkel der oder der wenigstens einen oder jeder Hülse ist insbesondere ringförmig ausgebildet. Bevorzugt weist die oder die wenigstens eine oder jede Hülse einen axialen Schenkel auf. Vorzugsweise geht der axiale Schenkel der oder der wenigstens einen oder jeder Hülse in den oder ihren oder den jeweiligen radialen Schenkel über. Der axiale Schenkel der oder der wenigstens einen oder jeder Hülse ist insbesondere zylindrisch ausgebildet.

Der oder der wenigstens eine Dichtungsbalg ist bevorzugt elastisch ausgebildet. Vorteilhaft bildet der oder der wenigstens eine Dichtungsbalg einen elastischen Körper. Vorzugsweise ist der oder der wenigstens eine Dichtungsbalg, insbesondere in der oder einer Neutralstellung des Gelenkinnenteils, bezüglich der Längsachse, rotationssymmetrisch oder näherungsweise rotationssymmetrisch ausgebildet. Bevorzugt besteht der oder der wenigstens eine Dichtungsbalg aus Elastomer. Beispielsweise besteht der Dichtungsbalg aus Chloropren-Kautschuk (CR). Bevorzugt ist in wenigstens einem oder in jeden, vorzugsweise axialen, Endbereich des oder des wenigstens einen Dichtungsbalgs ein Verstärkungsring eingebettet, der vorzugsweise aus Metall besteht.

Bevorzugt liegt der Dichtungsbalg an der oder der wenigstens einen Hülse oder an jeder Hülse, vorzugsweise endseitig, insbesondere radial und/oder axial, an. Vorteilhaft liegt der Dichtungsbalg an der oder der wenigstens einen Hülse oder an jeder Hülse gleitfähig an. Bevorzugt liegt der Dichtungsbalg an dem radialen Schenkel der oder der wenigstens einen Hülse oder jeder Hülse, vorzugsweise endseitig und/oder stirnseitig, insbesondere axial, an. Vorteilhaft liegt der Dichtungsbalg an dem radialen Schenkel der oder der wenigstens einen Hülse oder jeder Hülse gleitfähig an. Bevorzugt liegt der Dichtungsbalg an dem axialen Schenkel der oder der wenigstens einen Hülse oder jeder Hülse, vorzugsweise endseitig, insbesondere radial, an. Vorteilhaft liegt der Dichtungsbalg an dem axialen Schenkel der oder der wenigstens einen Hülse oder jeder Hülse gleitfähig an.

Gemäß einer Ausgestaltung bildet die oder die wenigstens eine Hülse oder eine oder wenigstens eine der Hülsen oder eine andere oder wenigstens eine andere der Hülsen eine oder wenigstens eine gelenkinnenteilseitige Hülse, die, vorzugsweise fest und/oder kraftschlüssig und/oder stoffschlüssig, mit dem Gelenkinnenteil verbunden ist. Beispielsweise ist die gelenkinnenteilseitige Hülse an das Gelenkinnenteil angespritzt oder auf das Gelenkinnenteil aufgeschoben und/oder aufgepresst. Bevorzugt umringt der Dichtungsbalg die gelenkinnenteilseitige Hülse. Vorzugsweise ist der Außendurchmesser der gelenkinnenteilseitige Hülse kleiner oder gleich dem Innendurchmesser des dem Lagerkörper abgewandten und die gelenkinnenteilseitige Hülse umringenden Endbereichs des Dichtungsbalgs. Vorteilhaft erstreckt sich der radiale Schenkel der gelenkinnenteilseitige Hülse, vorzugsweise ausgehend von der gelenkinnenteilseitige Hülse, von dem Gelenkinnenteil weg.

Der lagerkörperseitige Balganlagebereich ist beispielsweise an dem Gehäuse vorgesehen. In diesem Fall kann der lagerkörperseitige Balganlagebereich z.B. auch als gehäuseseitiger Balganlagebereich bezeichnet werden. Bevorzugt ist der lagerkörperseitige Balganlagebereich an dem Lagerkörper vorgesehen.

Gemäß einer Weiterbildung bildet die oder die wenigstens eine Hülse oder eine oder wenigstens eine der Hülsen oder eine andere oder wenigstens eine andere der Hülsen eine oder wenigstens eine lagerkörperseitige Hülse, die, vorzugsweise fest und/oder stoffschlüssig, mit dem Lagerkörper verbunden und/oder einteilig und/oder materialhomogen mit diesem ausgebildet ist. Beispielsweise ist die lagerkörperseitige Hülse an den Lagerkörper angespritzt und/oder bildet mit diesem zusammen ein Spritzgussteil. Bevorzugt ist der Dichtungsbalg von der lagerkörperseitigen Hülse umringt. Vorzugsweise ist der Innendurchmesser der lagerkörperseitigen Hülse größer oder gleich dem Außendurchmesser des dem Lagerkörper zugewandten und von der lagerkörperseitigen Hülse umringten Endbereichs des Dichtungsbalgs. Vorteilhaft erstreckt sich der radiale Schenkel der lagerkörperseitigen Hülse, vorzugsweise ausgehend von der lagerkörperseitigen Hülse, auf das Gelenkinnenteil zu.

Gemäß einer Ausgestaltung ist das Gehäuse mit zwei Zapfenöffnungen versehen, die vorzugsweise in axialer Richtung einander gegenüberliegen. Bevorzugt erstreckt sich in diesem Fall das Gelenkinnenteil, insbesondere in axialer Richtung, durch beide Zapfenöffnungen hindurch aus dem Gehäuse heraus. Vorteilhaft umfasst das Gelenk zwei das Gelenkinnenteil umringende Dichtungsbälge, die sich jeweils von einem an dem Lagerkörper oder Gehäuse vorgesehenen lagerkörperseitigen Balganlagebereich bis zu einem an dem Gelenkinnenteil vorgesehenen gelenkinnenteilseitigen Balganlagebereich erstrecken. Dabei sind die lagerkörperseitigen Balganlagebereiche bevorzugt an zwei in axialer Richtung einander gegenüberliegenden Enden des Gehäuses oder des Lagerkörpers vorgesehen. Vorzugsweise sind die gelenkinnenteilseitigen Balganlagebereiche in axialer Richtung bezüglich des Lagerbereichs auf unterschiedlichen Seiten des Gelenkinnenteils vorgesehen. Die gelenkinnenteilseitigen Balganlagebereiche liegen insbesondere außerhalb des Gehäuses und/oder des Lagerkörpers. Vorteilhaft sind die gelenkinnenteilseitigen Balganlagebereiche an den Halsbereichen vorgesehen.

Das Gelenk ist oder wird bevorzugt für ein Fahrzeug vorgesehen und/oder in dieses eingebaut. Bei dem Fahrzeug handelt es sich insbesondere um ein Kraftfahrzeug. Vorteilhaft ist oder wird das Gelenkinnenteil mit einem ersten Fahrzeugbauteil verbunden, welches vorzugsweise ein Fahrwerkbauteil ist. Beispielsweise ist das erste Fahrzeugbauteil ein Achsschenkel, ein Radträger, eine Fahrwerklenker, wie z.B. ein Querlenker oder Längslenker, ein Achskörper, ein Fahrschemel, ein Hilfsrahmen oder ein Fahrzeugaufbau oder Fahrzeugrahmen. Vorteilhaft ist oder wird das Gehäuse mit einem zweiten Fahrzeugbauteil verbunden, welches vorzugsweise ein Fahrwerkbauteil ist. Beispielsweise ist das zweite Fahrzeugbauteil ein Achsschenkel, ein Radträger, eine Fahrwerklenker, wie z.B. ein Querlenker oder Längslenker, ein Achskörper, ein Fahrschemel, ein Hilfsrahmen oder ein Fahrzeugaufbau oder Fahrzeugrahmen.

Die Erfindung betrifft ein Verfahren zur Herstellung des zuvor beschriebenen Gelenks, wobei
- das Gelenkinnenteil, das Gehäuse und der wenigstens eine Dichtungsbalg hergestellt werden,
- das Gelenkinnenteil in das Gehäuse eingebracht wird, sodass es mit dem Lagerbereich in dem Gehäuse angeordnet ist und sich aus diesem durch die Zapfenöffnung hindurch, insbesondere in der oder einer axialen Richtung, heraus erstreckt,
- durch Umspritzen oder Umgießen des in dem Gehäuse angeordneten Lagerbereichs mit Kunststoff der Lagerkörper hergestellt und fest mit dem Gehäuse verbunden wird,
- der wenigstens eine Dichtungsbalg über das Gelenkinnenteil geführt wird, sodass der Dichtungsbalg das Gelenkinnenteil umringt und sich von dem an dem Lagerkörper oder Gehäuse vorgesehenen lagerkörperseitigen Balganlagebereich bis zu dem an dem Gelenkinnenteil vorgesehenen gelenkinnenteilseitigen Balganlagebereich erstreckt, und wobei
- die oder die wenigstens eine Hülse als zylindrische Hülse aus Kunststoff hergestellt und an dem wenigstens einen Balganlagebereich vorgesehen wird, sodass die Hülse das Gelenkinnenteil umringt und sich in axialer Richtung erstreckt, wonach der Dichtungsbalg und die Hülse beim Führen des Dichtungsbalgs über das Gelenkinnenteil ineinander geschoben werden, wonach die Hülse durch Umformen und/oder Abwinkeln axial endseitig mit ihrem den Dichtungsbalg axial abstützenden radialen Schenkel versehen wird.

Das Verfahren kann gemäß allen im Zusammenhang mit dem zuvor beschriebenen Gelenk erläuterten Ausgestaltungen weitergebildet werden. Ferner kann das zuvor beschriebene Gelenk gemäß allen im Zusammenhang mit dem Verfahren erläuterten Ausgestaltungen weitergebildet sein.

Da die oder die wenigstens eine Hülse aus Kunststoff hergestellt wird, kann sichergestellt werden, dass die Reibung zwischen dem Dichtungsbalg und der Hülse gering ist. Ferner muss der Dichtungsbalg zur Montage nicht aufgeweitet oder komprimiert werden, da die Hülse, insbesondere zunächst, als zylindrische Hülse hergestellt und erst nach der Montage des Dichtungsbalgs mit dem radialen Schenkel versehen wird.

Bevorzugt werden die oder mehrere Hülsen, insbesondere zunächst, als zylindrische Hülsen aus Kunststoff hergestellt und an den Balganlagebereichen vorgesehen, sodass die Hülsen das Gelenkinnenteil umringen und sich in axialer Richtung erstrecken, wonach der Dichtungsbalg und jede Hülse beim Führen des Dichtungsbalgs über das Gelenkinnenteil ineinander geschoben werden, wonach jede Hülse, durch Umformen und/oder Abwinkeln, insbesondere axial endseitig, mit dem oder ihrem oder einem den Dichtungsbalg, insbesondere stirnseitig und/oder endseitig, axial abstützenden radialen Schenkel versehen wird.

Das Gehäuse wird bevorzugt durch Blechumformung und/oder Umformung hergestellt. Vorteilhaft wird das Gehäuse aus Metall, beispielsweise aus Aluminium oder aus einem Eisenwerkstoff, wie z.B. Stahl, hergestellt. Vorzugsweise wird das Gehäuse aus Blech, insbesondere aus Aluminiumblech oder aus Stahlblech hergestellt. Das Gelenkinnenteil wird bevorzugt durch Kaltumformung hergestellt. Vorteilhaft wird das Gelenkinnenteil, insbesondere anschließend, in oder an seinem Lagerbereich und/oder an der Oberfläche seines Lagerbereichs nachbearbeitet. Das Nachbearbeiten umfasst z.B. Spanen und/oder Rollieren und/oder Schleifen. Insbesondere dient das Nachbearbeiten zum Glätten und/oder Härten des Lagerbereichs und/oder der Oberfläche des Lagerbereichs. Das Gelenkinnenteil wird bevorzugt aus Metall, beispielsweise aus Aluminium oder aus einem Eisenwerkstoff, wie z.B. Stahl, hergestellt.

Beispielsweise wird das Gelenkinnenteil als fertigfließgepresstes Gelenkinnenteil und/oder als fertigfließgepresste Kugelhülse hergestellt. Vorteilhaft werden der oder der wenigstens eine Halsbereich oder die Halsbereiche und/oder der oder der wenigstens eine gelenkinnenteilseitige Balganlagebereich oder die gelenkinnenteilseitige Balganlagebereiche, insbesondere nach der Kaltumformung, vor dem Vorsehen der oder der wenigstens einen Hülse oder der Hülsen an dem oder dem wenigstens einen gelenkinnenteilseitigen Balganlagebereich oder an den gelenkinnenteilseitigen Balganlagebereichen, nicht nachbehandelt und/oder im Zustand des Rohteils belassen.

Der Lagerkörper wird bevorzugt durch Gießen oder Spritzgießen hergestellt. Insbesondere wird der Lagerkörper aus einem thermoplastischen Kunststoff hergestellt. Beispielsweise wird der Lagerkörper aus Polyamid (PA) oder aus Polyoxymethylen (POM) hergestellt. Vorteilhaft ist oder wird der Kunststoff des Lagerkörpers mit Fasern versetzt und/oder verstärkt. Vorzugsweise wird der Lagerkörper aus einem faserverstärkten Kunststoff hergestellt. Beispielsweise handelt es sich bei den Fasern um Glasfasern. Durch das Umspritzen oder Umgießen des in dem Gehäuse angeordneten Lagerbereichs mit Kunststoff und/oder durch das Herstellen des Lagerkörpers wird der Lagerbereich bevorzugt von dem Lagerkörper umschlossen und/oder das Gelenkinnenteil mit seinem Lagerbereich beweglich in dem Lagerkörper gelagert.

Die oder die wenigstens eine oder jede Hülse wird bevorzugt durch Gießen oder Spritzgießen hergestellt. Insbesondere wird die oder die wenigstens eine oder jede

Hülse aus einem thermoplastischen Kunststoff hergestellt. Beispielsweise wird die oder die wenigstens eine oder jede Hülse aus Polyamid (PA) oder aus Polyoxymethylen (POM) hergestellt. Vorteilhaft ist oder wird der Kunststoff der oder der wenigstens einen oder jeder Hülse mit Fasern versetzt und/oder verstärkt. Beispielsweise handelt es sich bei den Fasern um Glasfasern. Vorzugsweise wird die oder die wenigstens eine oder jede Hülse aus demselben oder dem gleichen Kunststoff oder Material wie der Lagerkörper hergestellt. Der radiale Schenkel der oder der wenigstens einen oder jeder Hülse ist oder wird insbesondere ringförmig ausgebildet.

Die oder die wenigstens eine oder jede Hülse axial endseitig mit dem oder einem den Dichtungsbalg, insbesondere stirnseitig und/oder endseitig, axial abstützenden radialen Schenkel versehen, indem sie, vorzugsweise axial endseitig und/oder an oder in einem axialen Endabschnitt, der insbesondere einen ihr zugewandten Endbereich des Dichtungsbalgs axial überragt, abgewinkelt und/oder umgeformt wird. Dieses Abwinkeln und/oder Umformen erfolgt bevorzugt durch ein oder unter Anwendung eines Kunststoffumformverfahrens. Beispielsweise erfolgt dieses Abwinkeln und/oder Umformen durch oder unter Anwendung von Ultraschallumformung und/oder durch ein oder unter Anwendung eines Wärmeverfahrens. Alternativ wird die oder die wenigstens eine oder jede Hülse z.B. durch Verschweißen, insbesondere axial endseitig, mit dem oder einem den Dichtungsbalg, insbesondere stirnseitig und/oder endseitig, axial abstützenden radialen Schenkel versehen, beispielsweise durch Verschweißen der oder der wenigstens einen oder jeder Hülse mit dem oder einem radialen Schenkel.

Bevorzugt ist oder wird die oder die wenigstens eine oder jede Hülse mit einem axialen Schenkel versehen und/oder hergestellt. Vorzugsweise geht der axiale Schenkel der oder der wenigstens einen oder jeder Hülse in den oder ihren oder den jeweiligen radialen Schenkel über. Der axiale Schenkel der oder der wenigstens einen oder jeder Hülse ist oder wird insbesondere zylindrisch ausgebildet.

Der oder der wenigstens eine Dichtungsbalg wird bevorzugt aus einem elastischen Material und/oder aus Elastomer hergestellt. Beispielsweise wird der Dichtungsbalg aus Chloropren-Kautschuk (CR) hergestellt. Bevorzugt wird in wenigstens einem oder in jedem, vorzugsweise axialen, Endbereich des oder des wenigstens einen Dichtungsbalgs ein Verstärkungsring eingebettet, der vorzugsweise aus Metall besteht und/oder hergestellt wird. Bevorzugt wird der oder der wenigstens eine Dichtungsbalg beim Führen des Dichtungsbalgs über das Gelenkinnenteil und/oder beim Ineinanderschieben des Dichtungsbalgs und der oder der wenigstens einen oder jeder die Hülse, vorzugsweise endseitig, insbesondere radial, an die oder die wenigstens eine Hülse oder an jede Hülse angelegt. Durch das Umformen und/oder Abwinkeln der oder der wenigstens einen oder jeder Hülse wird der radiale Schenkel an den oder den wenigstens einen Dichtungsbalg, vorzugsweise endseitig und/oder stirnseitig, axial, angelegt.

Gemäß einer Ausgestaltung bildet die oder die wenigstens eine Hülse oder eine oder wenigstens eine der Hülsen oder eine andere oder wenigstens eine andere der Hülsen eine oder wenigstens eine gelenkinnenteilseitige Hülse, die, insbesondere fest und/oder kraftschlüssig und/oder stoffschlüssig, mit dem Gelenkinnenteil verbunden wird. Vorteilhaft wird die gelenkinnenteilseitige Hülse, insbesondere zunächst, derart hergestellt, das ihr Außendurchmesser kleiner oder gleich dem Innendurchmesser des dem Lagerkörper abgewandten oder abzuwendenden Endbereichs des Dichtungsbalgs ist.

Vorzugsweise werden der Dichtungsbalg und die gelenkinnenteilseitige Hülse derart ineinander geschoben, dass der Dichtungsbalg die gelenkinnenteilseitige Hülse umringt, wonach bevorzugt die gelenkinnenteilseitige Hülse, insbesondere axial endseitig und/oder an oder in einem axialen Endabschnitt, der vorzugsweise einen dem Lagerkörper abgewandten Endbereich des Dichtungsbalgs axial überragt, umgeformt und/oder abgewinkelt und/oder mit dem oder einem radialen Schenkel versehen wird, vorzugsweise derart, dass ihr radialer Schenkel sich, insbesondere ausgehend von der gelenkinnenteilseitigen Hülse, von dem Gelenkinnenteil weg erstreckt.

Die gelenkinnenteilseitige Hülse wird z.B. separat hergestellt und anschließend auf das Gelenkinnenteil aufgeschoben und/oder aufgepresst. Bevorzugt wird die gelenkinnenteilseitige Hülse aber an das Gelenkinnenteil angespritzt.

Gemäß einer Ausgestaltung bildet die oder die wenigstens eine Hülse oder eine oder wenigstens eine der Hülsen oder eine andere oder wenigstens eine andere der Hülsen eine oder wenigstens eine lagerkörperseitige Hülse, die, insbesondere fest und/oder stoffschlüssig, mit dem Lagerkörper verbunden und/oder einteilig mit diesem ausgebildet wird. Vorteilhaft wird die lagerkörperseitige Hülse, insbesondere zunächst, derart hergestellt, das ihr Innendurchmesser größer oder gleich dem Außendurchmesser des dem Lagerkörper zugewandten oder zuzuwendenden Endbereichs des Dichtungsbalgs ist.

Vorzugsweise werden der Dichtungsbalg und die lagerkörperseitige Hülse derart ineinander geschoben, dass der Dichtungsbalg von der lagerkörperseitigen Hülse umringt ist oder wird, wonach bevorzugt die lagerkörperseitige Hülse, insbesondere axial endseitig und/oder an oder in einem axialen Endabschnitt, der vorzugsweise einen dem Lagerkörper zugewandten Endbereich des Dichtungsbalgs axial überragt, umgeformt und/oder abgewinkelt und/oder mit dem oder einem radialen Schenkel versehen wird, vorzugsweise derart, dass ihr radialer Schenkel sich, insbesondere ausgehend von der lagerkörperseitigen Hülse, auf das Gelenkinnenteil zu erstreckt. Bevorzugt wird die oder die wenigstens eine lagerkörperseitige Hülse zusammen und/oder gleichzeitig mit dem Lagerkörper, insbesondere in einem Guss- oder Spritzgussvorgang, hergestellt. Vorteilhaft wird die oder die wenigstens eine lagerkörperseitige Hülse zusammen und/oder gleichzeitig mit der oder der wenigstens einen gelenkinnenteilseitigen Hülse, insbesondere in dem oder einem Guss- oder Spritzgussvorgang, hergestellt.

Gemäß einer Ausgestaltung ist oder wird das Gehäuse, insbesondere bei seiner Herstellung, mit zwei Zapfenöffnungen versehen, die vorzugsweise in axialer Richtung einander gegenüberliegen. Bevorzugt wird das Gelenkinnenteil derart in das Gehäuse eingebracht, dass es mit dem Lagerbereich in dem Gehäuse angeordnet ist oder wird und sich aus diesem durch die oder beide Zapfenöffnungen hindurch, insbesondere in axialer Richtung, heraus erstreckt. Vorteilhaft werden zwei Dichtungsbälge hergestellt. Insbesondere wird jeder Dichtungsbalg über das Gelenkinnenteil geführt, sodass jeder Dichtungsbalg das Gelenkinnenteil umringt und sich von dem oder einem, vorzugsweise an dem Lagerkörper oder Gehäuse vorgesehenen, lagerkörperseitigen Balganlagebereich bis zu dem oder einem, vorzugsweise an dem Gelenkinnenteil vorgesehenen, gelenkinnenteilseitigen Balganlagebereich erstreckt. Dabei sind oder werden die lagerkörperseitigen Balganlagebereiche bevorzugt an zwei in axialer Richtung einander gegenüberliegenden Enden des Gehäuses oder des Lagerkörpers vorgesehen. Vorzugsweise sind oder werden die gelenkinnenteilseitigen Balganlagebereiche in axialer Richtung bezüglich des Lagerbereichs auf unterschiedlichen Seiten des Gelenkinnenteils vorgesehen. Die gelenkinnenteilseitigen Balganlagebereiche liegen insbesondere außerhalb des Gehäuses und/oder des Lagerkörpers. Vorteilhaft sind die gelenkinnenteilseitigen Balganlagebereiche an den Halsbereichen vorgesehen.

Die Erfindung wird nachfolgend anhand einer bevorzugten Ausführungsform unter Bezugnahme auf die Zeichnung beschrieben. In der Zeichnung zeigen:
Fig. 1 einen Längsschnitt durch ein durch ein Verfahren gemäß der Erfindung hergestelltes Gelenk,
Fig. 2 einen Längsschnitt durch das Gelenk im teilweise hergestellten Zustand, wobei ein Gelenkinnenteil in ein Gehäuse eingebracht ist,
Fig. 3 den Längsschnitt nach Fig. 2, wobei zusätzlich in das Gehäuse ein das Gelenkinnenteil umschließender Lagerkörper vorgesehen ist und
Fig. 4 den Längsschnitt nach Fig. 3, wobei zusätzlich zwei Dichtungsbälge auf das Gelenkinnenteil aufgeschoben sind.

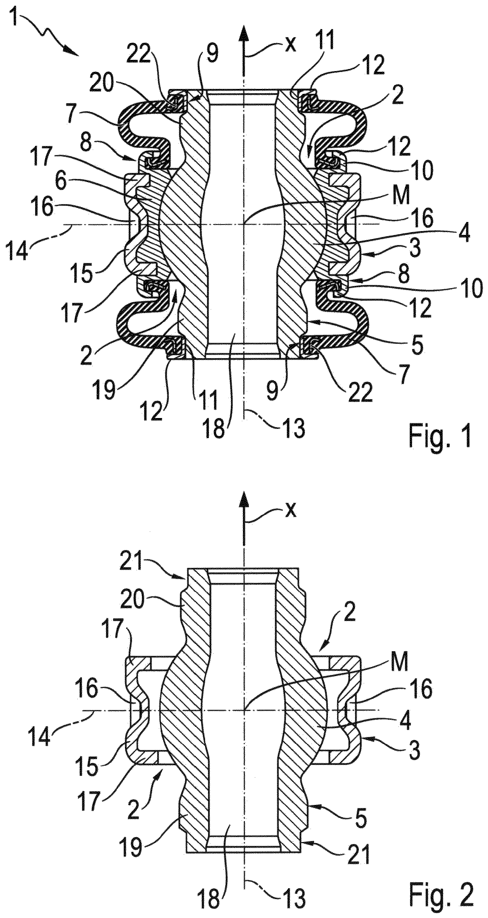

Aus Fig. 1 ist ein Längsschnitt durch ein als Kugelhülsengelenk ausgebildetes Gelenk 1 gemäß einer Ausführungsform ersichtlich, welches ein mit zwei in einer axialen Richtung x einander gegenüberliegenden Zapfenöffnungen 2 versehenes Gehäuse 3, ein einen kugelförmigen Lagerbereich 4 aufweisendes Gelenkinnenteil 5 in Form einer Kugelhülse, welches mit seinem Lagerbereich 4 in dem Gehäuse 3 angeordnet ist und sich durch die Zapfenöffnungen 2 hindurch aus dem Gehäuse 3 heraus erstreckt, einem in dem Gehäuse 3 angeordneten, fest mit diesem verbundenen, den Lagerbereich 4 umschließenden und aus Kunststoff bestehenden Lagerkörper 6, in welchem das Gelenkinnenteil 5 mit seinem Lagerbereich 4 beweglich gelagert ist, und zwei das Gelenkinnenteil umringende Dichtungsbälge 7, die sich jeweils von einem an dem Lagerkörper 6 vorgesehenen lagerkörperseitigen Balganlagebereich 8 bis zu einem an dem Gelenkinnenteil 5 vorgesehenen gelenkinnenteilseitigen Balganlagebereich 9 erstrecken.

An jedem der lagerkörperseitigen Balganlagebereiche 8 ist eine das Gelenkinnenteil 5 umringende und sich in axialer Richtung x erstreckende Hülse 10 aus Kunststoff vorgesehen, die den jeweiligen Dichtungsbalg 7 umringt und an einem axialen Ende einen sich auf das Gelenkinnenteil 5 zu erstreckenden radialen Schenkel 12 aufweist, an dem der jeweilige Dichtungsbalg 7 stirnseitig axial abgestützt ist. Ferner ist an jedem der gelenkinnenteilseitigen Balganlagebereiche 9 eine das Gelenkinnenteil 5 umringende und sich in axialer Richtung x erstreckende Hülse 11 aus Kunststoff vorgesehen, die von dem jeweiligen Dichtungsbalg 7 umringt ist und an einem axialen Ende einen sich von dem Gelenkinnenteil 5 weg erstreckenden radialen Schenkel 12 aufweist, an dem der jeweilige Dichtungsbalg 7 stirnseitig axial abgestützt ist.

Dem Gelenk 1 und/oder dem Gehäuse 3 ist eine in axialer Richtung x verlaufende Längsachse 13 zugeordnet, die insbesondere mittig durch das Gehäuse 3 und/oder durch die Zapfenöffnungen 2 verläuft. Jede oder jedwede quer zur axialen Richtung x und/oder zur Längsachse 13 verlaufende Richtung wird insbesondere als radiale Richtung bezeichnet. Das Gehäuse 3 ist bezüglich der Längsachse 13 rotationssymmetrisch oder näherungsweise rotationssymmetrisch. Ferner ist dem Gelenkinnenteil 5 eine Gelenkinnenteillängsachse zugeordnet, die in einer aus den Zeichnungsfiguren ersichtlichen Neutralstellung des Gelenkinnenteils 5 mit der Längsachse 13 zusammenfällt. Das Gelenkinnenteil 5 ist bezüglich der Gelenkinnenteillängsachse rotationssymmetrisch. Ferner ist das Gelenk 1, insbesondere in der Neutralstellung, bezüglich einer durch den Mittelpunkt M des Lagerbereichs 4 und senkrecht zur Längsachse 13 verlaufenden Symmetrieebene 14 spiegelsymmetrisch oder näherungsweise spiegelsymmetrisch ausgebildet.

Das Gehäuse 1 weist eine den Lagerkörper 6 umringenden Wandung 15 auf, in der mehrere in Umfangsrichtung des Gehäuses 3 voneinander beabstandete Einprägungen 16 vorgesehen sind, die sich radial in das Material des Lagerkörpers 6 hinein erstrecken, sodass dieser drehstarr mit dem Gehäuse 3 verbunden ist. Bis auf diese Einprägungen 16 ist das Gehäuse 3 insbesondere rotationssymmetrisch ausgebildet. Ferner weist das Gehäuse 3 an seinen axialen Enden jeweils einen sich radial in das Material des Lagerkörpers 6 hinein erstreckenden Vorsprung 17 auf, durch welchen der Lagerkörper 6 in axialer Richtung x formschlüssig an dem Gehäuse 3 gesichert ist.

Durch das Gelenkinnenteil 5 erstreckt sich ein Durchgangsloch 18 hindurch, welches insbesondere in axialer Richtung x und/oder in Richtung der Gelenkinnenteillängsachse verläuft. Ferner weist das Gelenkinnenteil 5 zwei sich jeweils an den Lagerbereich 4 anschließende und sich von diesem weg erstreckende Halsbereiche 19 und 20 auf, zwischen denen der Lagerbereich 4 angeordnet ist. Die gelenkinnenteilseitigen Balganlagebereiche 9 sind an den Halsbereichen 19 und 20 vorgesehen. Insbesondere sind die gelenkinnenteilseitigen Balganlagebereiche 9 durch, vorzugsweise axiale, Endbereiche des Gelenkinnenteils 5 gebildet. Bevorzugt ist das Gelenkinnenteil 5 in den gelenkinnenteilseitigen Balganlagebereichen 9 an seinem Außenumfang mit umlaufenden Vertiefungen 21 versehen, die Hülsensitze für die gelenkinnenteilseitigen Hülsen 11 bilden. Ferner sind die Dichtungsbälge 7 an ihren Enden jeweils mit eingebetteten Verstärkungsringen 22 versehen.

Nachfolgend wird unter Bezugnahme auf die Fig. 2 bis 3 ein Verfahren zur Herstellung des Gelenks 1 beschrieben.

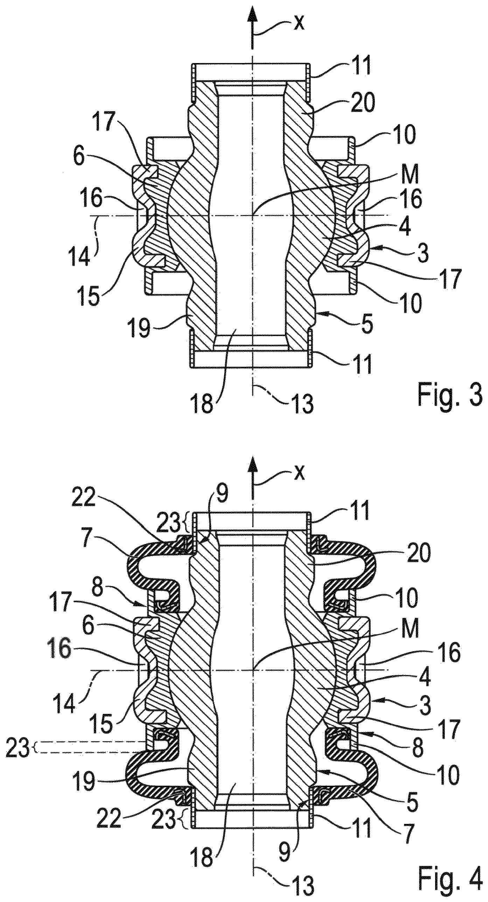

Zunächst werden das Gehäuse 3, das Gelenkinnenteil 5 und die Dichtungsbälge 7 hergestellt. Danach wird das Gelenkinnenteil 5 in das Gehäuse 3 eingebracht, sodass es mit dem Lagerbereich 4 in dem Gehäuse 3 angeordnet ist und sich aus diesem durch die Zapfenöffnungen 2 hindurch heraus erstreckt. Dies ist aus Fig. 2 ersichtlich. Anschließend wird durch Umspritzen des in dem Gehäuse 3 angeordneten Lagerbereichs 4 mit Kunststoff der Lagerkörper 6 hergestellt, wobei gleichzeitig die Hülsen 10 und 11 zunächst als zylindrische Hülsen aus Kunststoff hergestellt werden, was aus Fig. 3 ersichtlich ist. Dabei werden die lagerkörperseitigen Hülsen 10 einteilig mit dem Lagerkörper 6 ausgebildet. Ferner werden die gelenkinnenteilseitigen Hülsen 11 in den umlaufenden Vertiefungen 21 an das Gelenkinnenteil 5 angespritzt.

Anschließend werden die Dichtungsbälge 7 von unterschiedlichen axialen Seiten her über das Gelenkinnenteil 5 geführt, sodass die Dichtungsbälge 7 und die Hülsen 10, 11 ineinander geschoben werden. Danach umringen die Dichtungsbälge 7 die gelenkinnenteilseitigen Hülsen 11, wohingegen die Dichtungsbälge 7 von den lagerkörperseitigen Hülsen 10 umringt werden, was aus Fig. 4 ersichtlich ist.

Anschließend werden die Hülsen 10 und 11 in einem axialen Endabschnitt 23 durch Ultraschallumformung oder unter Anwendung eines Wärmeverfahrens abgewinkelt, wodurch sie mit den radialen Schenkeln 12 versehen werden, sodass sich das Gelenk 1 gemäß Fig. 1 ergibt.

### Bezugszeichen

- 1: Gelenk
- 2: Zapfenöffnung
- 3: Gehäuse
- 4: Lagerbereich
- 5: Gelenkinnenteil
- 6: Lagerkörper
- 7: Dichtungsbalg
- 8: lagerkörperseitiger Balganlagebereich
- 9: gelenkinnenteilseitiger Balganlagebereich
- 10: lagerkörperseitige Hülse
- 11: gelenkinnenteilseitige Hülse
- 12: radialer Schenkel der Hülse
- 13: Längsachse
- 14: Symmetrieebene
- 15: Wandung des Gehäuses
- 16: Einprägung
- 17: Vorsprung
- 18: Durchgangsloch
- 19: Halsbereich
- 20: Halsbereich
- 21: Vertiefung
- 22: Verstärkungsring
- 23: axialer Endabschnitt
- x: axiale Richtung
- M: Mittelpunkt des Lagerbereichs

## Patentansprüche

1. Verfahren zur Herstellung eines Gelenks (1) mit einem mit wenigstens einer Zapfenöffnung (2) versehenen Gehäuse (3), wobei
- ein einen Lagerbereich (4) aufweisendes Gelenkinnenteil (5), das Gehäuse (3) und wenigstens ein Dichtungsbalg (7) hergestellt werden,
- das Gelenkinnenteil (5) in das Gehäuse (3) eingebracht wird, sodass es mit dem Lagerbereich (4) in dem Gehäuse (3) angeordnet ist und sich aus diesem durch die Zapfenöffnung (2) hindurch in axialer Richtung (x) heraus erstreckt,
- durch Umspritzen oder Umgießen des in dem Gehäuse (3) angeordneten Lagerbereichs (4) mit Kunststoff der den Lagerbereich (4) umschließenden Lagerkörper (6) hergestellt und fest mit dem Gehäuse (3) verbunden wird,
- der wenigstens eine Dichtungsbalg (7) über das Gelenkinnenteil (5) geführt wird, sodass der Dichtungsbalg (7) das Gelenkinnenteil (5) umringt und sich von einem an dem Lagerkörper (6) oder Gehäuse (3) vorgesehenen lagerkörperseitigen Balganlagebereich (8) bis zu einem an dem Gelenkinnenteil (5) vorgesehenen gelenkinnenteilseitigen Balganlagebereich (9) erstreckt,
- die oder die wenigstens eine Hülse (10, 11) als zylindrische Hülse aus Kunststoff hergestellt und an dem wenigstens einen Balganlagebereich (8, 9) vorgesehen wird,
**dadurch gekennzeichnet, dass** die Hülse (10, 11) das Gelenkinnenteil (5) umringt und sich in axialer Richtung (x) erstreckt, wonach der Dichtungsbalg (7) und die Hülse (10, 11) beim Führen des Dichtungsbalgs (7) über das Gelenkinnenteil (5) ineinander geschoben werden, wonach die Hülse (10, 11) durch Umformen und/oder Abwinkeln an einem axialen Ende mit einem den Dichtungsbalg (7) axial abstützenden radialen Schenkel (12) versehen wird.

2. Verfahren nach Anspruch 1, **dadurch gekennzeichnet, dass** mehrere Hülsen (10, 11) als zylindrische Hülsen aus Kunststoff hergestellt und an den Balganlagebereichen (8, 9) vorgesehen werden, sodass die Hülsen (10, 11) das Gelenkinnenteil (5) umringen und sich in axialer Richtung (x) erstrecken, wonach der Dichtungsbalg (7) und jede Hülse (10, 11) beim Führen des Dichtungsbalgs (7) über das Gelenkinnenteil (5) ineinander geschoben werden, wonach jede Hülse (10, 11) mit ihrem den Dichtungsbalg (7) axial abstützenden radialen Schenkel (12) versehen wird.

3. Verfahren nach Anspruch 1 oder 2, **dadurch gekennzeichnet, dass** die Hülse oder eine der Hülsen eine gelenkinnenteilseitige Hülse (11) bildet, die fest mit dem Gelenkinnenteil (5) verbunden wird.

4. Verfahren nach Anspruch 3, **dadurch gekennzeichnet, dass** der Dichtungsbalg (7) und die gelenkinnenteilseitige Hülse (11) derart ineinander geschoben werden, dass der Dichtungsbalg (7) die gelenkinnenteilseitige Hülse (11) umringt, wonach die gelenkinnenteilseitige Hülse (11) derart abgewinkelt wird, dass ihr radialer Schenkel (12) sich von dem Gelenkinnenteil (5) weg erstreckt.

5. Verfahren nach Anspruch 3 oder 4, **dadurch gekennzeichnet, dass** die gelenkinnenteilseitige Hülse (11) an das Gelenkinnenteil (5) angespritzt wird.

6. Verfahren nach einem der Ansprüche 1 bis 5, **dadurch gekennzeichnet, dass** die Hülse oder eine der Hülsen oder eine andere der Hülsen eine lagerkörperseitige Hülse (10) bildet, die fest mit dem Lagerkörper (6) verbunden oder einteilig mit diesem ausgebildet wird.

7. Verfahren nach Anspruch 6, **dadurch gekennzeichnet, dass** der Dichtungsbalg (7) und die lagerkörperseitige Hülse (10) derart ineinander geschoben werden, dass der Dichtungsbalg (7) von der lagerkörperseitigen Hülse (10) umringt ist, wonach die lagerkörperseitige Hülse (10) derart abgewinkelt wird, dass ihr radialer Schenkel (12) sich auf das Gelenkinnenteil (5) zu erstreckt.

8. Verfahren nach Anspruch 6 oder 7, **dadurch gekennzeichnet, dass** die lagerkörperseitige Hülse (10) zusammen mit dem Lagerkörper (6) hergestellt wird.

9. Verfahren nach einem der Ansprüche 6 bis 8, **dadurch gekennzeichnet, dass** die lagerkörperseitige Hülse (10) gleichzeitig mit der gelenkinnenteilseitige Hülse (11) hergestellt wird.

## Claims

1. Method for producing a joint (1) with a housing (3) which is provided with at least one pin opening (2),
- a joint inner part (5), which has a bearing region (4), the housing (3) and at least one sealing gaiter (7) being produced,
- the joint inner part (5) being introduced into the housing (3), with the result that it is arranged with the bearing region (4) in the housing (3) and extends out of the latter in the axial direction (x) through the pin opening (2),
- the bearing body (6) which encloses the bearing region (4) being produced and connected fixedly to the housing (3) by way of overmoulding or casting plastic around the bearing region (4) which is arranged in the housing (3),
- the at least one sealing gaiter (7) being guided over the joint inner part (5), with the result that the sealing gaiter (7) surrounds the joint inner part (5) and extends from a bearing body-side gaiter contact region (8), provided on the bearing body (6) or housing (3), as far as a joint inner part-side gaiter contact region (9), provided on the joint inner part (5),
- the sleeve or the at least one sleeve (10, 11) being produced as a cylindrical sleeve from plastic and being provided on the at least one gaiter contact region (8, 9),
**characterized in that**
the sleeve (10, 11) surrounds the joint inner part (5) and extends in the axial direction (x), after which the sealing gaiter (7) and the sleeve (10, 11) are pushed into one another during guiding of the sealing gaiter (7) over the joint inner part (5), after which the sleeve (10, 11) is provided with a radial limb (12) which supports the sealing gaiter (7) axially by way of reshaping and/or angling away at one axial end.

2. Method according to Claim 1, **characterized in that** a plurality of sleeves (10, 11) are produced as cylindrical sleeves from plastic and are provided on the gaiter contact regions (8, 9), with the result that the sleeves (10, 11) surround the joint inner part (5) and extend in the axial direction (x), after which the sealing gaiter (7) and each sleeve (10, 11) are pushed into one another during guiding of the sealing gaiter (7) over the joint inner part (5), after which each sleeve (10, 11) is provided with its radial limb (12) which supports the sealing gaiter (7) axially.

3. Method according to Claim 1 or 2, **characterized in that** the sleeve or one of the sleeves forms a joint inner part-side sleeve (11) which is connected fixedly to the joint inner part (5).

4. Method according to Claim 3, **characterized in that** the sealing gaiter (7) and the joint inner part-side sleeve (11) are pushed into one another in such a way that the sealing gaiter (7) surrounds the joint inner part-side sleeve (11), after which the joint inner part-side sleeve (11) is angled away in such a way that its radial limb (12) extends away from the joint inner part (5) .

5. Method according to Claim 3 or 4, **characterized in that** the joint inner part-side sleeve (11) is moulded onto the joint inner part (5).

6. Method according to one of Claims 1 to 5, **characterized in that** the sleeve or one of the sleeves or another one of the sleeves forms a bearing body-side sleeve (10) which is connected fixedly to the bearing body (6) or is configured in one piece with the latter.

7. Method according to Claim 6, **characterized in that** the sealing gaiter (7) and the bearing body-side sleeve (10) are pushed into one another in such a way that the sealing gaiter (7) is surrounded by the bearing body-side sleeve (10), after which the bearing body-side sleeve (10) is angled away in such a way that its radial limb (12) extends towards the joint inner part (5).

8. Method according to Claim 6 or 7, **characterized in that** the bearing body-side sleeve (10) is produced together with the bearing body (6).

9. Method according to one of Claims 6 to 8, **characterized in that** the bearing body-side sleeve (10) is produced at the same time as the joint inner part-side sleeve (11).

## Revendications

1. Procédé pour produire une articulation (1) comportant un boîtier (3) doté d'au moins une ouverture de tourillon (2),
dans lequel
- une partie intérieure d'articulation (5) présentant une région de palier (4), le boîtier (3) et au moins un soufflet d'étanchéité (7) sont produits,
- la partie intérieure d'articulation (5) est introduite dans le boîtier (3), de sorte qu'elle soit disposée avec la région de palier (4) dans le boîtier (3) et s'étende hors de celui-ci à travers l'ouverture de tourillon (2) dans la direction axiale (x),
- le corps de palier (6) entourant la région de palier (4) est produit par enrobage par injection ou enrobage par coulée avec du plastique de la région de palier (4) disposée dans le boîtier (3) et est relié solidement au boîtier (3),
- l'au moins un soufflet d'étanchéité (7) est guidé sur la partie intérieure d'articulation (5) de sorte que le soufflet d'étanchéité (7) entoure la partie intérieure d'articulation (5) et s'étende d'une région d'appui de soufflet (8) côté corps de palier prévue sur le corps de palier (6) ou le boîtier (3) à une région d'appui de soufflet (9) côté partie intérieure d'articulation prévue sur la partie intérieure d'articulation (5),
- la ou l'au moins une douille (10, 11) est produite sous forme de douille cylindrique en plastique et est prévue sur l'au moins une région d'appui de soufflet (8, 9),
**caractérisé en ce que**
la douille (10, 11) entoure la partie intérieure d'articulation (5) et s'étend dans la direction axiale (x), après quoi, lors du guidage du soufflet d'étanchéité (7) sur la partie intérieure d'articulation (5), le soufflet d'étanchéité (7) et la douille (10, 11) sont emboîtés l'un dans l'autre, après quoi la douille (10, 11) est dotée, par déformation et/ou pliage, d'une branche (12) radiale supportant axialement le soufflet d'étanchéité (7) à une extrémité axiale.

2. Procédé selon la revendication 1, **caractérisé en ce que** plusieurs douilles (10, 11) sont produites sous forme de douilles cylindriques en plastique et sont prévues sur les régions d'appui de soufflet (8, 9), de sorte que les douilles (10, 11) entourent la partie intérieure d'articulation (5) et s'étendent dans la direction axiale (x), après quoi, lors du guidage du soufflet d'étanchéité (7) sur la partie intérieure d'articulation (5), le soufflet d'étanchéité (7) et chaque douille (10, 11) sont emboîtés les uns dans les autres, après quoi chaque douille (10, 11) est dotée de sa branche (12) radiale supportant axialement le soufflet d'étanchéité (7).

3. Procédé selon la revendication 1 ou 2, **caractérisé en ce que** la douille ou l'une des douilles forme une douille (11) côté partie intérieure d'articulation, qui est reliée solidement à la partie intérieure d'articulation (5).

4. Procédé selon la revendication 3, **caractérisé en ce que** le soufflet d'étanchéité (7) et la douille (11) côté partie intérieure d'articulation sont emboîtés l'un dans l'autre de telle sorte que le soufflet d'étanchéité (7) entoure la douille (11) côté partie intérieure d'articulation, après quoi la douille (11) côté partie intérieure d'articulation est pliée de telle sorte que sa branche radiale (12) s'étende à l'écart de la partie intérieure d'articulation (5).

5. Procédé selon la revendication 3 ou 4, **caractérisé en ce que** la douille (11) côté partie intérieure d'articulation est moulée par injection sur la partie intérieure d'articulation (5).

6. Procédé selon l'une des revendications 1 à 5, **caractérisé en ce que** la douille ou l'une des douilles ou une autre des douilles forme une douille (10) côté corps de palier, laquelle est reliée solidement au corps de palier (6) ou est réalisée d'une seule pièce avec celui-ci.

7. Procédé selon la revendication 6, **caractérisé en ce que** le soufflet d'étanchéité (7) et la douille (10) côté corps de palier sont emboîtés l'un dans l'autre de telle sorte que le soufflet d'étanchéité (7) soit entouré par la douille (10) côté corps de palier, après quoi la douille (10) côté corps de palier est pliée de telle sorte que sa branche radiale (12) s'étende vers la partie intérieure d'articulation (5).

8. Procédé selon la revendication 6 ou 7, **caractérisé en ce que** la douille (10) côté corps de palier est produite conjointement avec le corps de palier (6).

9. Procédé selon l'une des revendications 6 à 8, **caractérisé en ce que** la douille (10) côté corps de palier est produite simultanément avec la douille (11) côté partie intérieure d'articulation.
